# FASCICULE DE BREVET EUROPEEN

(11) **EP 4 165 715 B1**
(45) Date de publication et mention de la délivrance du brevet: **24.07.2024**
(21) Numéro de dépôt: 21735398.6
(22) Date de dépôt: 03.06.2021
(51) Int. Cl.: H01M 50/249, H01M 50/204, H01M 50/207, H01M 50/231, H01M 50/233, H01M 50/262

(54) **COFFRE À BATTERIES POUR VÉHICULE**
BATTERIEKASTEN FÜR EIN FAHRZEUG
BATTERY BOX FOR A VEHICLE

(30) Priorité: 10.06.2020 FR 2006062
(43) Date de publication de la demande: 19.04.2023
(73) Titulaire: KNDS France, 78034 Versailles Cedex (FR)
(72) Inventeur: JACQUEMONT, Jacky, 18023 Bourges (FR)
(74) Mandataire: Cabinet Chaillot
(86) Numéro de dépôt international: PCT/IB2021/054874
(87) Numéro de publication internationale: WO 2021/250514

(56) Documents cités:
- EP-A1- 1 561 659
- EP-A1- 2 191 704

## Description

Le domaine technique de l'invention est celui des moyens d'emport et de protection pour les batteries électriques des véhicules.

Les batteries sont habituellement logées dans des boîtiers en tôles légères solidaires du châssis du véhicule. Les batteries de technologie Lithium-ion sont particulièrement performantes mais elles présentent un risque d'incendie accru et doivent donc être très protégées.

Ce besoin est particulièrement fort pour les véhicules militaires, tels que les véhicules de combat blindés. Les batteries utilisées par ces véhicules sont le plus souvent logées dans des coffres qui sont positionnés autour du véhicule pour faciliter l'accès aux batteries depuis l'extérieur et rendre leur remplacement plus aisé.

Ces coffres constituent des zones de vulnérabilité qui doivent être protégées vis-à-vis des impacts de projectiles.

Une première idée serait de recouvrir les coffres pour batteries de plaques de blindage, mais une telle solution conduit à alourdir le véhicule, modifie sa silhouette externe ou crée des problèmes d'intégration, et réduit la facilité d'accès aux batteries.

On connaît ainsi en particulier par le brevet EP2191704 un coffre destiné à recevoir un supercondensateur et qui est accessible de l'extérieur du véhicule. Le coffre est fermé par une plaque de blindage recouverte d'une couche d'isolant thermique.

Si ce coffre est particulièrement compact, le ou les blindages de protection forment une surépaisseur sur la paroi du véhicule qui nuit à la furtivité de ce dernier.

C'est le but de l'invention que de proposer un coffre pouvant recevoir une ou plusieurs batteries, coffre dont la protection peut être modulée en fonction des besoins opérationnels sans modifier la forme externe du coffre, et dont l'accessibilité au contenu reste aisée.

Ainsi l'invention a pour objet un coffre à batteries pour véhicule, coffre comportant un volume interne délimité par des parois et destiné à recevoir au moins une batterie, coffre comportant au moins un couvercle démontable donnant accès au volume interne du coffre, coffre caractérisé en ce qu'il comporte :
- au moins deux pattes de liaison disposées dans le volume interne du coffre et solidaires de parois de ce dernier,
- au moins une plaque d'interface qui est fixée par des moyens de fixation démontables aux pattes de liaison, les pattes de liaison ayant une répartition permettant d'assurer un appui de la plaque d'interface sur au moins deux de ses côtés, de façon à limiter sa flexion, la plaque d'interface se logeant dans le volume interne du coffre, entre le couvercle et la ou les batteries,
- au moins une première plaque de blindage qui est fixée de façon démontable à la plaque d'interface.

Selon un mode particulier de réalisation, la ou les batteries pourront être logées dans des tiroirs montés sur des glissières permettant de faire coulisser le tiroir par rapport aux parois, en direction d'une ouverture libérée par le retrait du couvercle.

Avantageusement, le coffre pourra comporter au moins une seconde plaque de blindage qui est fixée à l'extérieur d'une des parois.

L'invention sera mieux comprise à la lecture de la description qui va suivre d'un mode particulier de réalisation, description faite en référence aux dessins annexés et dans lesquels :
[Fig.1] représente, en vue de face et couvercle retiré, un coffre à batteries selon un mode de réalisation de l'invention ;
[Fig.2] montre le même coffre en vue de face après retrait des plaques de blindage interne, de façon à visualiser la plaque d'interface ;
[Fig.3] montre ce même coffre en vue de face après retrait des plaques de blindage interne et de la plaque d'interface pour permettre l'accès aux batteries ;
[Fig.4] est une vue en coupe transversale du coffre selon l'invention, vue suivant le plan dont la trace AA est repérée à la [Fig.1], et avec les batteries retirées.

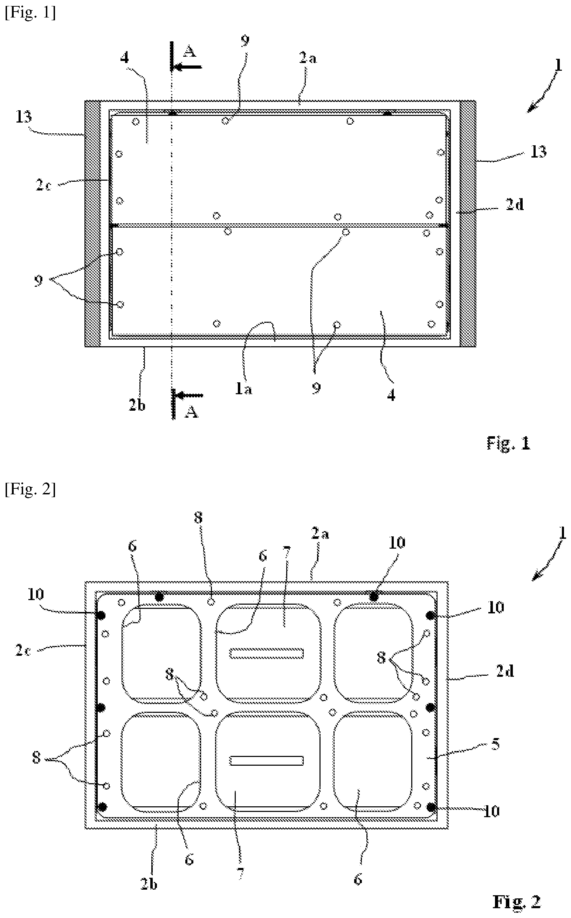

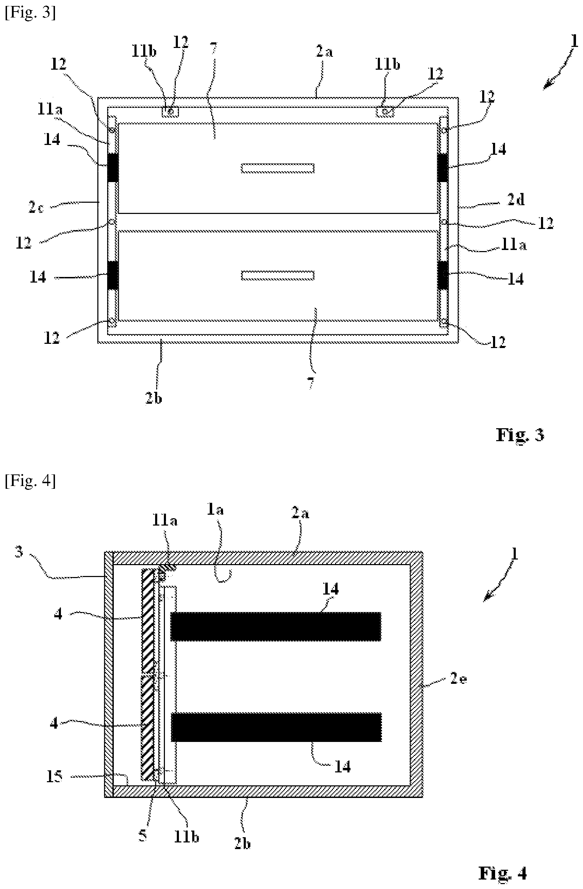

En se reportant à la [Fig.1], un coffre 1 à batteries pour véhicule selon un mode de réalisation de l'invention, comporte un volume interne 1a, qui est globalement parallélépipédique et qui est délimité par des parois : une paroi supérieure 2a, une paroi inférieure 2b, deux parois latérales 2c et 2d et une paroi arrière 2e (voir la [Fig.4]).

Un couvercle de fermeture 3, qui est démontable, (visible à la [Fig.4]) est également prévu. Ce couvercle obture une ouverture avant 15 et donne accès au volume interne 1a du coffre 1. Il pourra être fixé par des vis ou des fixations à grenouillère.

Comme on le voit sur la [Fig.1], des premières plaques de blindage 4 sont disposées dans le volume interne 1a et masquent les batteries.

Des secondes plaques de blindage 13 sont éventuellement fixées à l'extérieur du coffre 1, au niveau des parois latérales 2c et 2d. Ces secondes plaques assurent un renforcement de la protection du coffre 1 d'une façon classique par renforcement de l'épaisseur d'une paroi fixe. Elles n'ont été représentées que sur la [Fig.1].

La [Fig.2] montre l'intérieur du coffre 1 après retrait des premières plaques de blindage 4. On voit qu'une plaque d'interface 5 est fixée aux parois du coffre 1 et s'interpose entre les premières plaques de blindage 4 et les batteries.

Cette plaque d'interface 5 est réalisée en un matériau léger, par exemple en alliage d'aluminium ou bien en un matériau composite. Elle est ajourée et comporte ainsi des ouvertures 6 au travers desquelles on voit ([Fig.2]) les tiroirs 7 portant les batteries.

La plaque d'interface 5 porte des taraudages 8 (ou des inserts taraudés) qui reçoivent des moyens de fixation démontables, tels que des vis 9, permettant la fixation des plaques de blindage 4.

La plaque d'interface 5 est elle-même fixée au coffre 1 par des moyens de fixation démontables, tels que d'autres vis 10, qui coopèrent avec des taraudages 12 aménagés sur des pattes de liaison 11a, 11b.

Comme on le voit sur la [Fig.3], le coffre 1 porte deux pattes de liaison courtes 11b solidaires de la paroi supérieure 2a et deux pattes de liaison allongées 11a solidaires chacune d'une paroi latérale 2c ou 2d.

Les pattes de liaison allongées 11a portées par les parois latérales 2c,2d sont des équerres qui s'étendent sensiblement de la paroi supérieure 2a jusqu'à la paroi inférieure 2b du coffre 1. Chacune des pattes de liaison allongées 11a porte ici trois taraudages 12.

Les pattes de liaison courtes 11b sont de petites équerres (voir la [Fig.4]) qui portent chacune un taraudage 12.

Les pattes de liaison 11a et 11b sont rendues solidaires des parois du coffre 1 par exemple par des soudures.

Comme on le voit sur les figures 3 et 4, des glissières à billes 14 sont fixées sur les parois latérales 2c et 2d. Ces glissières 14 sont par ailleurs fixées aux tiroirs 7 qui reçoivent la ou les batteries.

Les glissières 14 permettent de faire coulisser les tiroirs 7 par rapport aux parois 2c et 2d, en direction de l'ouverture avant 15, libérée par le retrait du couvercle 3.

On voit donc qu'avec l'invention les premières plaques de blindage 4 sont intégralement logées dans le volume interne 1a du coffre 1. Ces premières plaques de blindage 4 ne modifient donc pas la forme externe et l'encombrement du coffre à batteries 1. Elles assurent cependant une protection renforcée du coffre en arrêtant les projectiles de petit ou moyen calibre qui risqueraient d'incendier les batteries.

Par ailleurs les premières plaques de blindage 4 peuvent ou non être fixées dans le coffre 1 en fonction du niveau de protection qui est recherché opérationnellement.

La nature des premières plaques de blindage 4 peut être modifiée de façon à adapter la protection des batteries à de nouvelles menaces.

Le montage proposé par l'invention mettant en oeuvre des pattes de liaison est particulièrement simple et léger. Le nombre et la répartition des pattes de liaison 11a et 11b est défini de façon à permettre d'assurer un appui de la plaque d'interface 5 sur au moins deux de ses côtés (et de préférence sur au moins trois de ses côtés).

De cette façon on limite la flexion de la plaque d'interface 5 qui porte les taraudages 8 permettant de fixer les premières plaques de blindage 4. Le profil de plaque d'interface 5 pourra comporter des nervures de renfort pour limiter sa flexion.

On assure ainsi une fixation rigide et fiable des plaques de blindages 4 à partir de pattes de liaison 11a,11b légères et en nombre réduit.

Bien entendu de nombreuses variantes sont possibles sans sortir du cadre de l'invention.

Le nombre de tiroirs 7 peut être différents. On pourra répartir les tiroirs en plusieurs colonnes et prévoir ainsi une cloison intermédiaire dans le coffre séparant les colonnes. Il y aura alors plusieurs plaques d'interface, une pour chaque colonne.

Le coffre 1 peut avoir des formes de ses parois latérales inclinées de façon à pouvoir être adapté à la forme d'une caisse de véhicule blindé particulier.

Les secondes plaques de blindages 13 peuvent ou non être prévues. Elles seront en particulier inutiles si les parois latérales 2c et 2d du coffre 1 sont elles mêmes protégées par la caisse du véhicule.

## Revendications

1. Coffre à batteries pour véhicule, coffre (1) comportant un volume interne (1a) délimité par des parois (2a,2b,2c,2d,2e) et destiné à recevoir au moins une batterie, coffre comportant au moins un couvercle (3) démontable donnant accès au volume interne (1a) du coffre, coffre ***caractérisé en ce qu**'il* comporte :
- au moins deux pattes de liaison (11a,11b) disposées dans le volume interne (1a) du coffre et solidaires de parois de ce dernier,
- au moins une plaque d'interface (5) qui est fixée par des moyens de fixation démontables (10) aux pattes de liaison, les pattes de liaison (11a,11b) ayant une répartition permettant d'assurer un appui de la plaque d'interface (5) sur au moins deux de ses côtés, de façon à limiter sa flexion, la plaque d'interface (5) se logeant dans le volume interne (1a) du coffre, entre le couvercle (3) et la ou les batteries,
- au moins une première plaque de blindage (4) qui est fixée de façon démontable à la plaque d'interface (5).

2. Coffre à batteries selon la revendication 1, **caractérisé en ce que** la ou les batteries sont logées dans des tiroirs (7) montés sur des glissières (14) permettant de faire coulisser le tiroir (7) par rapport aux parois (2a,2b,2c,2d,2e) en direction d'une ouverture (15) libérée par le retrait du couvercle (3).

3. Coffre à batteries selon une des revendications 1 ou 2, **caractérisé en ce qu'**il comporte au moins une seconde plaque de blindage (13) qui est fixée à l'extérieur d'une des parois (2a,2b,2c,2d,2e).

## Patentansprüche

1. - Batteriekasten für ein Fahrzeug, wobei der Kasten (1) ein Innenvolumen (1a) aufweist, das von Wänden (2a, 2b, 2c, 2d, 2e) begrenzt und zur Aufnahme von mindestens einer Batterie bestimmt ist, wobei der Kasten mindestens einen entfernbaren Deckel (3) aufweist, der Zugang zum Innenvolumen (1a) des Kastens gewährt, wobei der Kasten **dadurch gekennzeichnet ist, dass** er aufweist:
- mindestens zwei Verbindungslaschen (11a, 11b), die im Innenvolumen (1a) des Kastens angeordnet und mit Wänden desselben fest verbunden sind,
- mindestens eine Schnittstellenplatte (5), die mit entfernbaren Befestigungsmitteln (10) an den Verbindungslaschen befestigt ist, wobei die Verbindungslaschen (11a, 11b) eine Verteilung haben, die erlaubt, eine Abstützung der Schnittstellenplatte (5) auf mindestens zwei ihrer Seiten zu sichern, so dass ihre Biegung begrenzt wird, wobei die Schnittstellenplatte (5) im Innenvolumen (1a) des Kastens zwischen dem Deckel (3) und der Batterie oder den Batterien untergebracht ist,
- mindestens eine erste Abschirmplatte (4), die an der Schnittstellenplatte (5) entfernbar befestigt ist.

2. - Batteriekasten nach Anspruch 1, **dadurch gekennzeichnet, dass** die Batterie(n) in Schubfächern (7) untergebracht sind, die auf Gleitschienen (14) angebracht sind, die erlauben, das Schubfach (7) im Verhältnis zu den Wänden (2a, 2b, 2c, 2d, 2e) in Richtung einer durch den Rückzug des Deckels (3) freigegebenen Öffnung (15) zu schieben.

3. - Batteriekasten nach einem der Ansprüche 1 oder 2, **dadurch gekennzeichnet, dass** er mindestens eine zweite Abschirmplatte (13) aufweist, die außerhalb einer der Wände (2a, 2b, 2c, 2d, 2e) befestigt ist.

## Claims

1. - A battery box for a vehicle, the box (1) comprising an internal volume (1a) delimited by walls (2a, 2b, 2c, 2d, 2e) and intended to receive at least one battery, the box comprising at least one removable cover (3) providing access to the internal volume (1a) of the box, the box being **characterized in that** it comprises:
- at least two connecting tabs (11a, 11b) arranged in the internal volume (1a) of the box and secured to the walls of the latter,
- at least one interface plate (5) that is attached by removable attachment means (10) to the connecting tabs, the connecting tabs (11a, 11b) having a distribution making it possible to ensure bearing of the interface plate (5) on at least two of its sides, so as to limit its bending, the interface plate (5) being housed in the internal volume (1a) of the box, between the cover (3) and the battery or batteries,
- at least a first shielding plate (4) that is removably attached to the interface plate (5).

2. - The battery box according to claim 1, **characterized in that** the battery or batteries are housed in drawers (7) mounted on guideways (14) allowing the drawers (7) to slide relative to the walls (2a, 2b, 2c , 2d, 2e) in the direction of an opening (15) freed by the removal of the cover (3).

3. - The battery box according to one of claims 1 or 2, **characterized in that** it comprises at least one second shielding plate (13) that is attached to the outside of one of the walls (2a, 2b, 2c, 2d, 2e).
